# EUROPÄISCHE PATENTSCHRIFT

(11) **EP 3 118 057 B1**
(45) Veröffentlichungstag und Bekanntmachung des Hinweises auf die Patenterteilung: **18.12.2019**
(21) Anmeldenummer: 16165345.6
(22) Anmeldetag: 14.04.2016
(51) Int. Cl.: B60P 1/00, B65F 3/28

(54) **SYSTEM VON GLEITENDEN BÖDEN UND SCHIEBEWÄNDEN, ANGEWENDET BEI LADEPRITSCHEN VON STRASSEN-SATTELAUFLIEGERN ZUM HORIZONTALEN ENTLADEN IN STUFEN**
SYSTEM OF SLIDING FLOORS AND SLIDING WALLS USED FOR LOAD PLATFORMS ON ROAD SEMI-TRAILERS FOR HORIZONTAL UNLOADING IN STAGES
SYSTEME DE SOLS FLOTTANTS ET CLOISONS MOBILES, UTILISE POUR DES PALETTES DE SEMI-REMORQUES POUR LE DECHARGEMENT HORIZONTAL ECHELONNE

(30) Priorität: 17.07.2015 BR 102015017218
(43) Veröffentlichungstag der Anmeldung: 18.01.2017
(73) Patentinhaber: Fliegl Agrartechnik GmbH, 84453 Mühldorf am Inn (DE)
(72) Erfinder: Mendes Beltrame, Fabrício, 89155-000 Dona Emma - SC (BR)
(74) Vertreter: Nußbaum, Christopher

(56) Entgegenhaltungen:
- FR-A1- 2 862 294
- GB-A- 589 306
- US-A- 3 207 382

## Beschreibung

Die vorliegende Beschreibung stellt ein System von gleitenden Böden mit Schiebewänden, die in Stufen betätigt werden, vor, das bei Straßen-Sattelaufliegern mit der Funktion des Entladens großer Volumina (im Bereich von 100 m³) in horizontaler Richtung angewendet wird, die hauptsächlich bei Transport und Entladung von Biomasse und Rückständen benutzt werden, da kein Kippen der Ladung benötigt wird.

Es ist auf dem Gebiet bereits bekannt, dass das Kippen großer Volumina, vorgenommen durch Sattelauflieger, angesichts der Abmessungen des Fahrzeugs, des Volumens und des Gewichts der entladenen Fracht als Folge eine große Gefahr des Umkippens mit sich bringt. In diesem Sinn wurden Systeme von Entladungen für diese Arten von Sattelaufliegern entwickelt, die mit Hilfe der Bewegung des Bodens des Sattelaufliegers vorgenommen werden. Diese Systeme sind als Sattelauflieger mit gleitendem Boden bekannt. Diese Lösung löst das Problem der Gefahr des Umkippens durch das Kippen, da die Entladung ohne die Notwendigkeit, den Sattelauflieger zu kippen, und durch das Verschieben seines Bodens erfolgt.

Es gibt bereits Entladungsmechanismen und Systeme, die als Lösung die Bereitstellung eines beweglichen Bodens verwenden, wobei sich der Boden abwechselnd nach vorn und nach hinten verlagert, mit einer maximalen Verlagerung im Bereich von 400 mm, wobei die Entladung mit einer Mulde der gleichen Abmessung in einer mittleren Zeit von 15 Minuten durchgeführt wird. Bei diesem System treten einige Probleme auf, wie es der Fall ist beim Vorhandensein von Rückstand des transportierten Materials auf Grund dessen, dass es keine Schiebewand gibt, sowie der Tatsache, dass, falls klebrige Materialien transportiert werden, Material an den Wänden oder Böden kleben bleibt, wobei solche Lösungen dieses Material nicht vom Boden oder von den Wänden ablösen werden. Für diese Probleme gibt es ebenfalls bereits Lösungen, die im Bereitstellen von vertikalen Schiebewänden bestehen, die mit Hilfe ihrer Verschiebung über den gleitenden Boden das Abkratzen der Oberfläche der Wände des Bodens durchführen.

Als Stand der Technik können wir das Dokument US2012177467, das eine Konstruktionsanordnung und ein System zur Bewegung des Containerbodens vorstellt, das Dokument US2002094258, das ebenfalls eine Vorrichtung zum Beladen und Entladen von Paletten mit Hilfe der horizontalen Bewegung oder Verschiebung der Oberfläche des Containers bereitstellt, angeben; die Japanische Patentschrift JP62259927 offenbart ebenfalls eine Lösung zum Beladen und Entladen mit Hilfe der Bewegung durch Verschiebung des Bodens des Containers. Die Patentschrift JP2005178959 stellt ebenfalls eine Lösung für in Containern angeordnete gleitende Böden vor.

Doch bietet nichts vom Stand der Technik eine Lösung mit einem System von gleitenden Böden, wenigstens zwei Böden, die in Stufen betätigt werden, wobei die Entladung mit Hilfe der Verschiebung jedes der Böden, in Verschiebungsstufen, durchgeführt wird. Diese Lösung ist äußerst bedeutsam und wichtig, weil diese Systeme von gleitenden Böden, die bereits bekannt sind, normalerweise einen Verschiebungsboden und eine Schiebewand bereitstellen, das heißt, 2 Stufen umfassen: Stufe 1, welche die Verschiebung des Bodens ist, und Stufe 2 welche die Verlagerung der Schiebwand ist. Auch der Erfinder selbst benutzt eine solche Lösung, die in Europa weithin im Einsatz und bekannt ist. In Brasilien wurde die Mulde mit 3 Achsen für Sattelauflieger mit Längen von 11 bis 15 Meter für den Transport von Holzspänen und geschlagenem Rohr und anderer Biomasse und mit Fassungsvermögen von 70 bis 100 m³ entwickelt. Doch es erwies sich, dass das benutzte zweistufige System eine niedrige betriebliche Leistung zeigte, da, im Fall seiner Verwendung beim Entladen von Ladepritschen mit großen Volumina, viel Kraftaufwand zum Entladen erforderlich ist. Dieser übermäßige Kraftaufwand verursacht strukturelle Schäden an der Ladepritsche (Ausbeulen der Pritsche auf Grund der erzeugten Beanspruchungen), und es trat das Verziehen der Schäfte der Zylinder, hervorgerufen durch das Übermaß der erzeugten Kraft, auf. Dies ist ebenfalls auf die Reibung der außerhalb des gleitenden Bodens angeordneten restlichen Ladung zurückzuführen. Damit ergibt diese restliche Ladung außerhalb des gleitenden Bodens eine Einschränkung für die Verlagerung und führt dazu, dass der Teil auf dem Boden verdichtet wird, wobei die Entladung nicht mit gleichbleibender Flüssigkeit erfolgt.

Diese vorgestellten technischen Probleme führen, außer, dass sie bei der Leistung der Ausrüstung, bei einem größeren Verschleiß der Ausrüstung, einer bei jeder Entladung erzeugten größeren Beanspruchung, bei dem Problem der Verdichtung der Ladung beeinträchtigen, ebenfalls zu Ausfällen bei der Hydraulikbaugruppe, auf Grund der größeren Beanspruchungen, und der Ladepritsche sowie zur Verzögerung der Entladung, was zu Unzufriedenheit der Kunden im Hinblick darauf führt.

Die US 3 207 382 A1 zeigt eine Abschiebevorrichtung eines Containers. Die Abschiebevorrichtung umfasst drei übereinander angeordnete Abschiebestufen, die in Form von verschiebbaren Böden ausgebildet sind. Die oberste Abschiebestufe ich verschiebbar auf der mittleren Abschiebestufe angebracht, welche verschiebbar auf der untersten Abschiebestufe angebracht ist, die wiederum verschiebbar auf einem Boden des Containers angebracht ist. An der obersten Abschiebestufe ist ein Vorsprung angebracht. Beim Verschieben der obersten Abschiebestufe stößt dieser Vorsprung an eine Rückwand des Containers an, wodurch die oberste Abschiebestufe in Längsrichtung des Containers maximal bis etwa zur Mitte des Containers verschoben werden kann.

Die GB 589 306 A beschreibt eine Abschiebevorrichtung für einen Laderaum eines Lastwagens. Der Laderaum wird durch mehrere halbkreisförmige Segmente gebildet. Die Segmente können zwischen einer auseinandergezogenen Aufnahmestellung und einer zusammengeschobenen, ineinander verschachtelten Entladestellung relativ zueinander bewegt werden. Das von einer Ladekante am weitesten entfernte Segment weist eine Wand auf, welche eine verschiebbare Rückwand des Laderaums bildet. In der Entladestellung ist diese Rückwand entsprechend der Länge des betreffenden Segments von der Ladekante entfernt. Um ein Entladen des Laderaums zu erleichtern, weist das von der Ladekante am weitesten entfernte Segment einen abschüssigen Boden auf.

Die vorliegende Beschreibung stellt ein System mit gleitenden Böden mit Schiebewand mit wenigstens drei Stufen vor, das alle vorgestellten Probleme und Nachteile löst. Es ist auf eine solche Weise konfiguriert, dass es eine Schiebewand umfasst, wobei diese das Abkratzen des Bodens und die gesamte Entladung des transportierten Materials vornimmt; es beseitigt ebenfalls das Problem in Bezug auf den Rückstand des transportierten Materials auf Grund dessen, dass es keine Schiebewand gibt, sowie ermöglicht den Transport von klebrigen Materialien, da das System selbst eine Wand aufweist, die das Abkratzen des Bodens vornimmt; es umfasst wenigstens zwei bewegliche Böden, mit dem Einschluss eines weiteren Bodens mit größerer Ausdehnung und kleinerer Verlagerung. Dieser Boden wird in der ersten Stufe betätigt, wobei die auf ihm abgesetzte Ladung zwei Dritteln der gesamten Ladung entspricht. Damit ergibt die restliche Ladung, die sich nicht auf dem Boden befindet, eine kleinere Einschränkung für die Verlagerung, was eine gleichbleibende, flüssige und schnellere Entladung aufrechterhält. Verglichen mit dem früheren System mit 2 Stufen führt dieses letztere die Entladung in kaum 3 Minuten vollständig aus.

Wahlweise ist es, für größere Ladepritschen, möglich, die Entladung noch in größere Anzahlen von Stufen zu teilen sowie die Menge von gleitenden Böden, die übereinander angebracht sind, zu erhöhen, wobei das Prinzip der Entladung in Stufen beachtet wird, das darauf abzielt, die Wirkung des Reibungswiderstandes der zu entladenden Ladung zu beseitigen, wobei Schiebebeanspruchungen verringert werden, was zu einer Verbesserung des Entladungsvorgangs als Ganzes führt.

Die dargebotenen Figuren werden, als Beispiel und Illustration, zusammen mit einer Beschreibung des betreffenden Systems, ein besseres Verständnis des entwickelten Gegenstandes ermöglichen.
Figur 1 illustriert eine Ausführungsform der Erfindung, die einen ersten gleitenden Boden, angebracht an dem Container, umfasst, und auf diesem ersten gleitenden Boden ist ein zweiter gleitender Boden angebracht, und auf dem zweiten gleitenden Boden ist eine Schiebewand angebracht, was eine Ausführungsform des Gedankens einer Entladung in wenigstens drei Stufen vorstellt.
Figur 2 illustriert die Funktionsweise dieses Systems von gleitenden Böden, wobei sie die Verlagerung des ersten Bodens, bezeichnet als erste Stufe, zeigt.
Figur 3 zeigt die Verlagerung des zweiten Bodens, bezeichnet als zweite Stufe.
Figur 4 zeigt die Verlagerung der Schiebewand, bezeichnet als dritte Stufe.

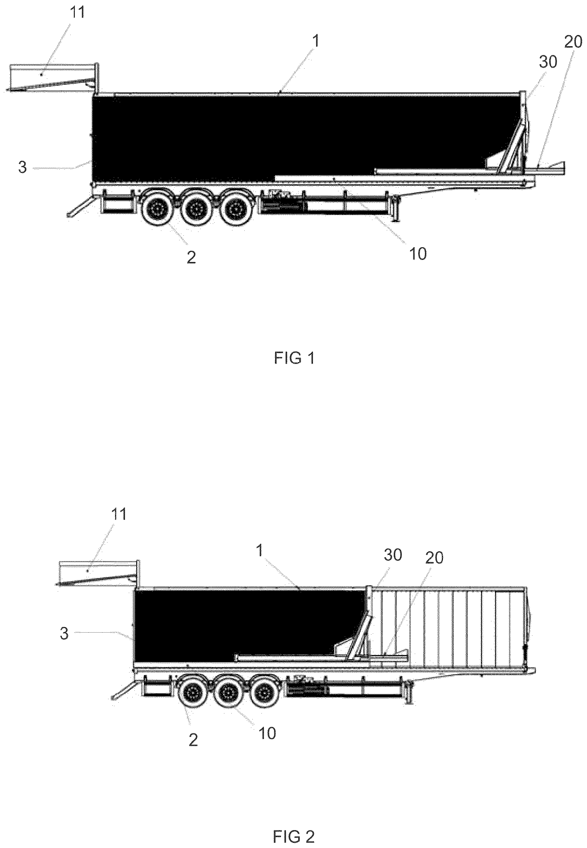

Wie in den Figuren vorgestellt, ist das System innen in der Ladepritsche (1) angebracht, die in Sattelaufliegern (2) angebracht ist; normalerweise weist diese Ladepritsche (1) eine hintere Bordwand (11) auf, wo eine Nutzlast (3) beladen und entladen wird. Das System besteht aus den folgenden Positionen: dem ersten Boden (10), wie Figur 1, 2, 3 und 4 zeigen, der einen an der Basis der Ladepritsche (1) angebrachten Boden umfasst, wobei er über Mittel verfügt, damit sich der Boden (10) in der Längsrichtung verschiebt, wobei er nach vorn und nach hinten verlagert werden kann, wobei die Verlagerung durch mechanische, elektromechanische Systeme, Hydraulikzylinder usw. bewirkt werden kann. Die Verschiebungsmittel können Schienen, Rollen oder kompatible mechanische Systeme sein, die eine solche Funktionsweise ermöglichen. Dieser erste gleitende Boden (10) wird, für eine Ladepritsche (1) von ungefähr 100 m³, eine Verlagerung von ungefähr 6 m in der Horizontalen aufweisen; vorzugsweise wird die Betätigung für die Verlagerung mit Hilfe von doppeltwirkenden linearen Hydraulikzylindern durchgeführt. Durchgeführte Versuche zeigten, dass es ideal ist, dass, für diese Abmessungen, der erste Boden (10) durch drei Hydraulikzylinder, mit doppelter linearer Wirkung, betätigt wird. Dieser erste Boden (10) wird die erste Schiebestufe für die Entladung der Nutzlast (3) durchführen.

Auf dem ersten Boden (10) ist ein zweiter gleitender Boden (20) angebracht, der ebenfalls über Mittel verfügt, damit sich der zweite Boden (20), über dem ersten Boden (10), in der Horizontalen verschiebt, wobei er nach vorn und nach hinten verschoben werden kann; die Verlagerung kann durch mechanische, elektromechanische Systeme, Hydraulikzylinder usw. bewirkt werden. Die Verschiebungsmittel können Systeme mit Schienen, Rollen oder kompatible mechanische Systeme sein, die eine solche Funktionsweise ermöglichen. Dieser zweite gleitende Boden (20) wird, für eine Ladepritsche (1) von ungefähr 100 m³, eine geringere Länge haben als der erste Boden (10) und wird ebenfalls eine geringere Verlagerung haben als der erste Boden (10); vorzugsweise wird die Verlagerung des zweiten Bodens (20) für diese Bedingungen 4,5 m in der Horizontalen betragen; vorzugsweise wird die Betätigung der Verlagerung des zweiten Bodens (20) mit Hilfe eines doppeltwirkenden linearen Hydraulikzylinders durchgeführt. Dieser zweite Boden (20) wird die zweite Schiebestufe für die Entladung durchführen.

Auf dem zweites Boden (20) ist eine vertikale Wand (30) zum Schieben angebracht, ebenfalls mit Mitteln, die ihre horizontale Verlagerung über dem zweiten Boden (20) ermöglichen. Die Mittel für die Verlagerung können ebenfalls kompatible mechanische Systeme sein, die eine solche Verlagerung ermöglichen, wie ein System mit Schienen, Rollen usw. Die Betätigung der Verlagerung kann durch mechanische, elektromechanische Systeme, durch Hydraulikzylinder, durch eine Spindel (Schneckengetriebe) oder ein anderes kompatibles System durchgeführt werden. Normalerweise wird, für eine Ladepritsche (1) im Bereich von 100 m³, diese Wand (30) eine horizontale Verlagerung im Bereich von 3 bis 3,5 Meter haben, wobei sie sich über dem zweiten Boden (20) verlagert. Vorzugsweise wird die Betätigung der Verlagerung der Wand (30) mit Hilfe von doppeltwirkenden linearen Hydraulikzylindern durchgeführt. Versuche zeigten, dass es ideal ist, dass die Wand (30) durch zwei doppeltwirkende lineare Hydraulikzylinder betätigt wird. Diese Wand (30) wird die dritte Schiebestufe für die vollständige Entladung der innerhalb der Ladepritsche (1) angeordneten Nutzlast (3) durchführen.

Es kann andere Ausführungsformen für dieses System zur Verlagerung in Stufen geben, insbesondere die, die eine größere Anzahl der Bereitstellung von gleitenden Böden vorstellen, wobei die Anzahl der Entladungsstufen gesteigert wird, in Abhängigkeit von der Abmessung und dem Volumen der Ladepritsche (1). Diese Ausführungsform der gleichen Ausrüstung mit dem Vorhandensein von mehr gleitenden Böden und mehr Entladungsstufen ist kennzeichnend für dieses System.

Das Anbringungssystem besteht, zum Zweck eines besseren Verständnisses und der Vorstellung einer Ausführungsform des Systems, wie in Figur 1 gezeigt, darin, dass die Schiebewand (30) mit einem Befestigungssystem des Zylinders an diesem zweiten Boden (20) auf dem zweiten Boden (20) angebracht ist. Der zweite Boden (20) ist mit einem Befestigungssystem des Zylinders an diesem Boden (10) auf dem ersten Boden (10) angebracht. Der erste Boden (10) ist innerhalb der Ladepritsche (1) angebracht und an derselben befestigt, und die Ladepritsche (1) ist an einem Sattelauflieger (2) angeordnet.

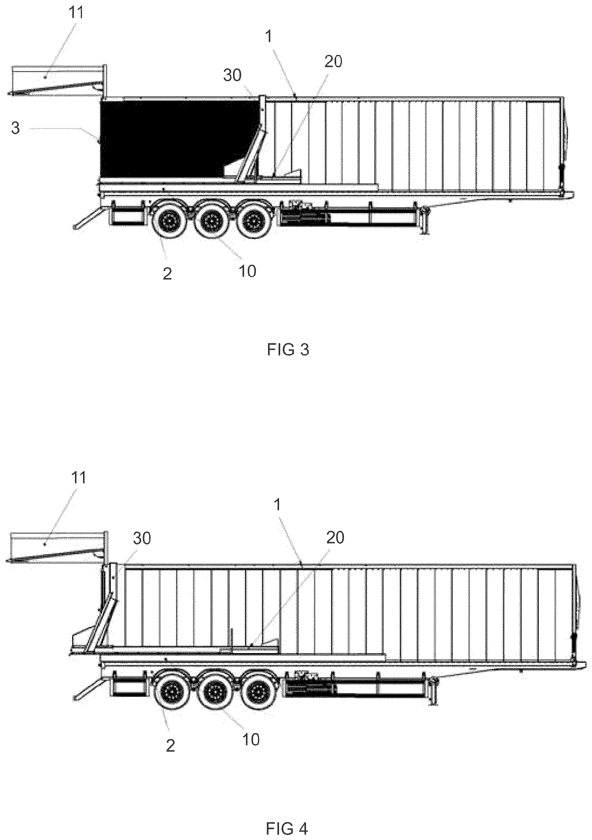

Damit führt im Betrieb, wenn das System betätigt wird, der erste Boden (10) die erste Stufe, die "Stufe 1 ", wie Figur 2 zeigt, durch. Er vollzieht die Verlagerung, wobei er den zweiten Boden (20) und die Schiebewand (30), obwohl sie nicht betätigt werden, mit sich nimmt, auf Grund der Tatsache, dass dieselben übereinander angebracht sind. Am Ende der Verlagerung des ersten Bodens (10), der "Stufe 1 ", wird dann der zweite Boden (20) betätigt, der sich über dem ersten Boden (10) verlagert, wobei er die zweite Entladungsstufe oder "Stufe 2", nach Figur 3, durchführt; der zweite Boden (20) verlagert sich, wobei er die Schiebewand (30), die auf ihm angebracht ist, mit sich nimmt. Am Ende der Verlagerung der "Stufe 2" wird dann die Schiebewand (30) betätigt, wobei sie die "Stufe 3" der Entladung, nach Figur 4, durchführt. Diese Schiebewand (30) verlagert sich über dem zweiten Boden (20) bis zum äußersten Ende der Ladepritsche (1), so nahe wie möglich an die hintere Bordwand (11), wobei sie die abschließende Entladung der Nutzlast (3) bewirkt.

Bei anderen Ausführungsformen des Systems, die größere Mengen von gleitenden Böden, zum Beispiel einen dritten Boden oder einen vierten gleitenden Boden, umfassen, wird dieses System diesem gleichen Anbringungs- und Funktionsprinzip gehorchen, wobei die Schiebewand auf dem obersten gleitenden Boden angeordnet ist, der auf den darauffolgenden gleitenden Boden angebracht sein wird, und so jeweils bis zum gleitenden Boden der Basis, der an der Ladepritsche selbst angebracht ist.

Unter Betätigung auf diese Weise und unter Benutzung dieser Abfolge können wir Ladepritschen für große Volumina konstruieren und eine erhöhte Entladungsgeschwindigkeit erreichen, ohne die Struktur derselben zu beeinträchtigen.

## Patentansprüche

1. System von gleitenden Böden und Schiebewänden, angewendet bei Ladepritschen von Straßen-Sattelaufliegern zum horizontalen Entladen in Stufen, das innerhalb einer Ladepritsche (1) angebracht ist, die an Straßen-Sattelaufliegern (2) angebracht ist, und wobei diese Ladepritsche (1) eine hintere Bordwand (11) aufweist, umfassend einen ersten gleitenden Boden (10), der an der Basis der Ladepritsche (1) angebracht ist, und einen zweiten gleitenden Boden (20), der auf dem ersten gleitenden Boden (10) angebracht ist,
**gekennzeichnet durch**
eine vertikale, gleitende Schiebewand (30), die auf dem zweiten gleitenden Boden (20) angebracht ist, wobei der erste Boden (10) die "Stufe 1" der Verlagerung durchführt, wobei er den zweiten Boden (20) und die Schiebewand (30) verschiebt und mit sich nimmt, und dann der zweite Boden (20) betätigt wird, der sich über dem ersten Boden (10) verlagert, wobei er die "Stufe 2" der Verlagerung durchführt, wobei er die Schiebewand (30), die auf ihm angebracht ist, mit sich nimmt, und dann die Schiebewand (30) betätigt wird, wobei sie die "Stufe 3" der Entladung durchführt, wobei sie sich über dem zweiten Boden (20) bis zum äußersten Ende der Ladepritsche (1), so nahe wie möglich an die hintere Bordwand (11), verlagert.

2. System von gleitenden Böden und Schiebewänden, angewendet bei Ladepritschen von Straßen-Sattelaufliegern zum horizontalen Entladen in Stufen, nach Anspruch 1, **dadurch gekennzeichnet, dass** die Betätigung für die Verlagerung der gleitenden Böden (10 und 20) und der gleitenden Schiebewand (30) mit Hilfe von doppeltwirkenden linearen Hydraulikzylindern durchgeführt wird.

3. System von gleitenden Böden und Schiebewänden, angewendet bei Ladepritschen von Straßen-Sattelaufliegern zum horizontalen Entladen in Stufen, nach den Ansprüchen 1 und 2, **dadurch gekennzeichnet, dass** der erste Boden (10) durch drei Hydraulikzylinder, mit doppelter linearer Wirkung, die an der Struktur der Pritsche (1) befestigt sind, betätigt wird; und die Schiebewand (30) durch zwei doppeltwirkende lineare Hydraulikzylinder, die auf dem zweiten gleitenden Boden (20) befestigt sind, betätigt wird; und der zweite gleitende Boden (20) durch einen doppeltwirkenden linearen Hydraulikzylinder, der auf dem ersten gleitenden Boden (10) befestigt ist, betätigt wird.

4. System von gleitenden Böden und Schiebewänden, angewendet bei Ladepritschen von Straßen-Sattelaufliegern zum horizontalen Entladen in Stufen, nach Anspruch 1, **dadurch gekennzeichnet, dass** die Verlagerung der Böden (10 und 20) und der Wand (30) in Längsrichtung, nach vorn und nach hinten, betätigt durch mechanische, elektromechanische Systeme, Hydraulikzylinder, erfolgt.

5. System von gleitenden Böden und Schiebewänden, angewendet bei Ladepritschen von Straßen-Sattelaufliegern zum horizontalen Entladen in Stufen, nach Anspruch 1, **dadurch gekennzeichnet, dass** die Verschiebung der Böden (10 und 20) und der Wand (30) über Schienen, Rollen oder kompatible mechanische Systeme erfolgt.

## Claims

1. System of sliding floors and sliding walls used with load platforms of road semi-trailers for horizontal unloading in stages, mounted inside a loading platform (1) mounted on road semi-trailers (2), and wherein this load platform has a rear side wall (11) comprising a first sliding floor (10) mounted on the base of the load platform (1), and a second sliding floor (20) mounted on the first sliding floor (10),
**characterised by**
a vertically sliding sliding wall (30) mounted on the second sliding floor (20), wherein the first floor (10) carries out the "step 1" of the displacement, wherein it displaces and carries along with it the second floor (20) and the sliding wall (30), and then the second floor (20) is actuated, which moves over the first floor (10), wherein it carries out the "step 2" of the displacement, wherein it carries along with it the sliding wall (30) mounted on it, and then the sliding wall (30) is actuated, wherein it carries out the "step 3" of the unloading, wherein it moves over the second floor (20) to the extreme end of the load platform (1) as close as possible to the rear side wall (11).

2. System of sliding floors and sliding walls used with load platforms of road semi-trailers for horizontal unloading in stages according to claim 1, **characterised in that** the actuation for the displacement of the sliding floors (10 and 20) and the sliding wall (30) is carried out by means of double-acting linear hydraulic cylinders.

3. System of sliding floors and sliding walls used with load platforms of road semi-trailers for horizontal unloading in stages according to claims 1 and 2, **characterised in that** the first floor (10) is actuated by three hydraulic cylinders with double linear action fastened to the structure of the platform (1); and the sliding wall (30) is actuated by two double-acting linear hydraulic cylinders mounted on the second sliding floor (20); and the second sliding floor (20) is actuated by a double-acting linear hydraulic cylinder mounted on the first sliding floor (10).

4. System of sliding floors and sliding walls, used with load platforms of road semi-trailers for horizontal unloading in stages according to claim 1, **characterised in that** the displacement of the floors (10 and 20) and of the wall (30) takes place in the longitudinal direction, forwards and backwards, actuated by mechanical electromechanical systems, hydraulic cylinders.

5. System of sliding floors and sliding walls, used with load platforms of road semi-trailers for horizontal unloading in stages according to claim 1, **characterised in that** the displacement of the floors (10 and 20) and of the wall (30) is carried out by means of rails, rollers or compatible mechanical systems.

## Revendications

1. Système de fonds glissants et parois coulissantes, utilisé pour des plateformes de chargement de semi-remorque routiers pour le déchargement horizontal par niveaux, qui est monté à l'intérieur d'une plateforme de chargement (1), qui est montée sur des semi-remorques routiers (2), et dans lequel cette plateforme de chargement (1) présente une paroi de bord arrière (11), comprenant un premier fond (10) glissant, qui est monté sur la base de la plateforme de chargement (1), et
un second fond (20) glissant, qui est monté sur le premier fond (10) glissant,
**caractérisé par**
une paroi coulissante (30) glissante verticale, qui est montée sur le second fond (20) glissant, dans lequel le premier fond (10) réalise « le niveau 1 » du déplacement, dans lequel il déplace le second fond (20) et la paroi coulissante (30), et les emmène avec lui, puis le second fond (20) est actionné, qui se déplace au-dessus du premier fond (10), dans lequel il réalise le « niveau 2 » du déplacement, dans lequel il emmène avec lui la paroi coulissante (30), qui est montée sur lui, puis la paroi coulissante (30) est actionnée, dans lequel elle réalise le « niveau 3 » du déchargement, dans lequel elle se déplace au-dessus du second fond (20) jusqu'à l'extrémité la plus extérieure de la plateforme de chargement (1), le plus près possible de la paroi de bord arrière (11).

2. Système de fonds glissants et parois coulissantes, utilisé pour des plateformes de chargement de semi-remorque routiers pour le déchargement horizontal par niveaux, selon la revendication 1, **caractérisé en ce que** l'actionnement pour le déplacement des fonds (10 et 20) glissants et de la paroi coulissante (30) glissante est réalisé à l'aide de vérins hydrauliques linéaires à double effet.

3. Système de fonds glissants et parois coulissantes, utilisé pour des plateformes de chargement de semi-remorque routiers pour le déchargement horizontal par niveaux, selon les revendications 1 et 2, **caractérisé en ce que** le premier fond (10) est actionné par trois vérins hydrauliques, à double effet linéaire, qui sont fixés sur la structure de la plateforme (1) ; et la paroi coulissante (30) est actionnée par deux vérins hydrauliques à double effet, qui sont fixés sur le second fond (20) glissant ; et le second fond (20) glissant est actionné par un vérin hydraulique à double effet, qui est fixé sur le premier fond (10) glissant.

4. Système de fonds glissants et parois coulissantes, utilisé pour des plateformes de chargement de semi-remorque routiers pour le déchargement horizontal par niveaux, selon la revendication 1, **caractérisé en ce que** le déplacement des fonds (10 et 20) et de la paroi (30) s'effectue dans la direction longitudinale, vers l'avant et vers l'arrière, actionné par des systèmes mécaniques, électromécaniques, vérins hydrauliques.

5. Système de fonds glissants et parois coulissantes, utilisé pour des plateformes de chargement de semi-remorque routiers pour le déchargement horizontal par niveaux, selon la revendication 1, **caractérisé en ce que** le déplacement des fonds (10 et 20) et de la paroi (30) s'effectue par l'intermédiaire de rails, de rouleaux ou de systèmes mécaniques compatibles.
